# FASCICULE DE BREVET EUROPEEN

(11) **EP 3 074 198 B1**
(45) Date de publication et mention de la délivrance du brevet: **27.09.2017**
(21) Numéro de dépôt: 14805241.8
(22) Date de dépôt: 26.11.2014
(51) Int. Cl.: B29C 49/42, B29B 11/14, B29C 49/40, B29C 31/00, B29C 49/56, B65G 47/90

(54) **DISPOSITIF DE TRANSPORT D'UN CORPS CREUX COMPORTANT DES MOYENS DE PRÉHENSION ACTIONNÉS MAGNÉTIQUEMENT**
VORRICHTUNG ZUM TRANSPORT EINES HOHLKÖRPERS MIT MAGNETISCH BETÄTIGTER GREIFVORRICHTUNG
DEVICE FOR TRANSPORTING A HOLLOW BODY COMPRISING A MAGNETICALLY ACTUATED GRIPPING MEANS

(30) Priorité: 28.11.2013 FR 1361751
(43) Date de publication de la demande: 05.10.2016
(73) Titulaire: Sidel Participations, 76930 Octeville-sur-Mer (FR)
(72) Inventeur: LE ROUX, Julien, F-76930 Octeville sur Mer (FR); DUJARDIN, Willy, F-76930 Octeville sur Mer (FR)
(74) Mandataire: Siloret, Patrick
(86) Numéro de dépôt international: PCT/EP2014/075612
(87) Numéro de publication internationale: WO 2015/078888

(56) Documents cités:
- EP-A1- 1 880 825
- WO-A2-2011/001357
- US-A1- 2013 015 040

## Description

La présente invention concerne un dispositif de transport d'un corps creux comportant des moyens de préhension actionnés magnétiquement.

La présente invention concerne plus particulièrement un dispositif de transport d'un corps creux muni d'un col qui comporte une paroi interne cylindrique d'orientation verticale et un bord supérieur délimitant circonférentiellement une ouverture d'accès à l'intérieur dudit corps creux, ledit dispositif comportant au moins des moyens de préhension du corps creux par coopération avec la paroi interne du col qui sont montés à l'extrémité libre inférieure d'une tige et liés en déplacement à la tige, ladite tige étant montée mobile verticalement entre :
- une position haute dans laquelle les moyens de préhension sont escamotés vers le haut par la tige pour permettre l'introduction radiale du col du corps creux dans une position déterminée de référence par rapport aux moyens de préhension du dispositif, et
- une position basse dans laquelle les moyens de préhension coopèrent radialement avec la paroi interne du col pour assurer la préhension du corps creux.

On connaît de l'état de la technique des dispositifs de transport comportant des moyens pour la préhension d'un corps creux muni d'un col, en particulier pour la préhension d'un corps creux en matière thermoplastique tel qu'une préforme ou un récipient (bouteille, flacon, pot, etc.).

Pour la préhension par le col de tels corps creux, on distingue notamment deux types de moyens de préhension, d'une part les moyens de préhension qui coopèrent principalement avec l'extérieur du col et, d'autre part, les moyens de préhension qui coopèrent seulement avec l'intérieur du col du corps creux.

Selon cette distinction, les moyens de préhension du dispositif selon l'invention sont du deuxième type, c'est à dire des moyens de préhension qui tiennent le corps creux par l'intérieur du col par coopération avec la paroi interne cylindrique du col, l'extérieur du col étant libre et dégagé.

En laissant l'extérieur du col libre et dégagé, les moyens de préhension du deuxième type autorisent en particulier la préhension du col par d'autres moyens de préhension, notamment aux fins d'un transfert du corps creux.

A titre d'exemple non limitatif, de tels autres moyens consistent par exemple en des pinces dont les mors coopèrent avec l'extérieur du col, notamment avec un filetage externe ou une gorge annulaire en fonction du type de col. Les mors sont par exemple reçus dans une gorge annulaire du col adjacente à une collerette radiale, ladite gorge étant de manière connue destinée à recevoir ultérieurement une bague d'inviolabilité après le bouchage du récipient final.

Le document WO-00/48819 décrit un exemple de dispositif de transport comportant des moyens de préhension du premier type, document auquel on se reportera pour plus de détails.

Par comparaison avec un dispositif de transport selon le premier type, la préhension du corps creux par l'intérieur du col avec des moyens de préhension d'un dispositif du deuxième type est souvent plus difficile à mettre en oeuvre.

La paroi interne du col est lisse ce qui limite les possibilités de coopération avec des moyens de préhension.

L'un des principaux problèmes rencontrés demeure la fiabilité de la préhension qui résulte de la coopération par friction des moyens de préhension avec la paroi interne.

Les moyens de préhension selon l'état de la technique sont en particulier très sensibles aux tolérances dimensionnelles existant sur le diamètre interne du col du corps creux.

Dans le cas d'un corps creux en matière thermoplastique tel qu'une préforme ou un récipient (bouteille, flacon, pot, etc.), la précision des dimensions du diamètre interne du col du corps creux est déterminée par la qualité de la fabrication de la préforme, laquelle préforme est généralement obtenue par un moulage par injection (ou en variante par extrusion).

Le document EP-1.880.825 décrit un exemple de dispositif de transport d'un corps creux comportant des moyens de préhension du deuxième type qui sont aptes à en assurer la préhension par l'intérieur du col.

Les moyens de préhension comportent des billes qui, destinées à coopérer avec la paroi interne, sont sollicitées radialement vers l'extérieur par des anneaux toriques déformables élastiquement, lesdits anneaux étant interposés radialement entre un noyau central et les billes agencées en périphérie.

Dans ce document, les moyens de préhension présentent à l'état libre, avant leur introduction à l'intérieur du col, un diamètre externe qui est supérieur au diamètre interne du col.

Les moyens de préhension sont agencés à l'extrémité inférieure d'une tige et sont liés en déplacement à la tige, ladite tige étant montée mobile verticalement entre une position haute et une position basse.

La préhension est obtenue en descendant la tige vers le col pour y emmancher à force les moyens de préhension, le contact avec le col sollicitant radialement les billes et provoquant une déformation élastique desdits des anneaux toriques.

La libération est obtenue en remontant la tige et en exerçant au moyen d'un éjecteur un effort de poussée de sens opposé sur le bord (ou buvant) du col de la préforme pour en extraire lesdits moyens de préhension.

En raison notamment du procédé de moulage par injection des préformes et des sources d'approvisionnement souvent différentes, y compris parfois pour la fabrication d'un même récipient, le diamètre interne des cols présente souvent dans la réalité une grande variabilité qui engendre des problèmes, en particulier lors de la préhension du col de la préforme (opération qui est encore appelée «vêtissage»).

Il est à noter que ces problèmes de préhension sont également susceptibles d'être rencontrés avec les récipients intermédiaires (ou ébauches) ou les récipients achevés d'être fabriqués à partir de telles préformes puisque ces préformes présentent, à l'issue de leur fabrication, un col ayant sa forme définitive, c'est à dire que le col de la préforme correspond au col du récipient final à obtenir.

Les moyens de préhension selon ce document ont avantageusement permis d'améliorer la fiabilité grâce à l'utilisation de billes qui limitent les efforts de friction lors de l'introduction (ou de l'extraction) des moyens de préhension à l'intérieur du col.

Toutefois même si les tolérances aux variations du diamètre interne du col ont été significativement améliorées par rapport à l'art antérieur, ces tolérances demeurent parfois insuffisantes et des problèmes surviennent encore au cours de la préhension notamment.

Le fonctionnement des moyens de préhension du dispositif de transport selon cet état de la technique ne donne donc pas entière satisfaction.

Dans une installation de fabrication de récipients à partir de préformes, les conséquences économiques de ces problèmes étant particulièrement importantes (rebus, dégradations des moyens de chauffage dans le four, perturbations voir arrêts de l'installation de fabrication, etc.), on recherche encore et toujours des solutions pour accroître les tolérances des moyens de préhension aux variations des diamètres internes des cols des corps creux.

Le but de la présente invention est notamment de proposer un dispositif de transport d'un corps creux dont les moyens de préhension présentent une plus grande tolérance aux variations des diamètres internes des cols, tout en conservant l'ensemble des avantages de rapidité et de simplicité du fonctionnement du dispositif de transport selon l'état de la technique.

Dans ce but, l'invention propose un dispositif de transport d'un corps creux muni d'un col du type décrit précédemment, caractérisé en ce que les moyens de préhension sont montés mobiles radialement entre :
- une position rétractée dans laquelle les moyens de préhension sont introduits verticalement de haut en bas à l'intérieur du col, sans contact avec la paroi interne, et
- une position déployée dans laquelle les moyens de préhension coopèrent avec la paroi interne du col,
et en ce que le changement de position des moyens de préhension d'au moins l'une à l'autre desdites positions rétractée et déployée est actionné par un champ magnétique produit par des moyens magnétiques.

Grâce au champ magnétique produit par les moyens magnétiques, l'actionnement des moyens de préhension entre les positions rétractée et déployée est obtenu de manière simple, rapide et fiable.

Avantageusement, l'utilisation d'aimants permanents comme moyens magnétiques permet d'obtenir un actionnement des moyens de préhension sans aucun apport d'énergie.

Avantageusement, les moyens magnétiques sont agencés pour agir sur les moyens de préhension en fonction du déplacement vertical de la tige, lesdits moyens magnétiques provoquant le changement de position desdits moyens de préhension vers la position déployée quasi simultanément à leur introduction à l'intérieur du col.

Par comparaison avec des moyens d'actionnement de type mécanique, les moyens magnétiques présentent de nombreux avantages, en particulier l'absence d'usure entre les moyens magnétiques et les moyens de préhension du fait de l'absence de contact et de frottement.

On rappellera à cet égard que, dans le cas d'application au transport des préformes dans un four d'une installation pour la fabrication de récipients, les cadences toujours plus élevées conduisent à un nombre d'opérations successives de préhension (vêtissage) et de libération (dévêtissage) très important et que la fiabilité des moyens de préhension est essentielle au bon fonctionnement d'une installation de fabrication de récipients.

C'est la raison pour laquelle il importe de conserver un fonctionnement des moyens de préhension qui soit aussi rapide que simple tout en présentant également une grande fiabilité.

Avantageusement, les moyens magnétiques sont agencés sur le support pour agir automatiquement sur les moyens de préhension liés en déplacement à la tige, lors de la fin de course de descente vers sa position basse de ladite tige.

Pour la préhension, l'introduction des moyens de préhension et la commande du changement de position depuis la position rétractée vers la position déployée sont obtenus suivant un même déplacement vertical de la tige, de la position haute vers la position basse.

Réciproquement pour la libération, l'extraction des moyens de préhension hors du col et la commande du changement de position des moyens de préhension depuis la position déployée vers la position rétractée sont obtenus avec l'intervention de moyens de rappel et suivant un même déplacement vertical vers le haut de la tige.

Grâce aux moyens de rappel des moyens de préhension vers la position rétractée, les moyens de préhension occupent toujours une position rétractée dans laquelle lesdits moyens de préhension présentent un diamètre externe qui est inférieur au diamètre intérieur du col de la préforme.

Avantageusement, grâce aux moyens de butée intervenant dans ladite position rétractée, lesdits moyens de préhension rappelés vers la position rétractée occupent une position bien déterminée.

Avantageusement, l'introduction à l'intérieur du col des moyens de préhension en position rétractée s'effectue sans effort, sans contact avec la paroi interne.

Par comparaison, dans l'état de la technique, les moyens de préhension étaient en contact avec la paroi interne pendant toute la course d'introduction résultant de la descente de la tige.

En effet, le col y sollicite radialement les billes à l'encontre des anneaux toriques déformables élastiquement pour provoquer la réduction du diamètre externe, puisque ce diamètre externe est initialement supérieur au diamètre interne du col.

Les anneaux toriques ont ainsi un rôle essentiel dans le fonctionnement de l'état de la technique EP-1.880.825.

Selon un premier cas de figure ("col étroit"), la déformation des anneaux toriques peut - en raison du diamètre interne du col et des tolérances sur ce dernier - être insuffisante pour que les moyens de préhension puissent être introduits verticalement totalement à l'intérieur du col. Un tel défaut de préhension du col peut avoir différentes conséquences.

Tout d'abord, ce défaut conduit à un positionnement incorrect de la préforme dont l'axe ne s'étend pas verticalement mais avec une inclinaison donnée et cela en raison notamment de l'absence de coopération de la butée de l'embase avec le bord du col et du contact rotulant des billes avec la paroi interne.

Dans le cas d'un dispositif de transport individuel de préforme équipant un four, le corps d'une préforme ainsi inclinée est alors susceptible de provoquer des dommages en entrant en contact avec les moyens de chauffage, tels que des lampes infrarouges.

Ensuite, même si la préforme s'étend verticalement, la position verticale du col est alors incorrecte par rapport à des moyens de préhension destinés à se saisir du col ou, pour reprendre l'exemple d'application précité dans un four, induit un positionnement incorrect du col par rapport des moyens de refroidissement et/ou de protection du col, et cela vaut également pour le corps par rapport aux moyens de chauffage du four.

Selon un deuxième cas de figure ("col large"), si en raison du diamètre interne du col et des tolérances sur ce dernier, la déformation des anneaux toriques est insuffisante alors l'effort appliqué par les billes sur la paroi interne du col peut l'être également. Un tel défaut de préhension du col peut là encore avoir différentes conséquences.

Par exemple, l'entraînement en rotation sur elle-même de la préforme lors du conditionnement thermique de son corps peut être perturbé en cas de glissement entre les billes et la paroi interne pour reprendre l'exemple précité d'application du dispositif de transport à un four.

Le dispositif de transport selon l'invention résout avantageusement ces problèmes rencontrés parfois avec un dispositif selon l'état de la technique EP-1.880.825 tout en améliorant encore les caractéristiques de fonctionnement en particulier la rapidité, la simplicité et la fiabilité pour effectuer la préhension et la libération par l'intérieur de son col d'un corps creux.

Dans l'invention, la préhension est obtenue automatiquement en un seul et même déplacement de la tige en direction du col, le champ magnétique sollicitant les moyens de préhension vers la position déployée à la fin de la course de déplacement vertical de la tige en direction du col, soit en position basse, le changement de position intervenant quasi simultanément à l'introduction des moyens de préhension à l'intérieur du col.

Avantageusement, après l'escamotage des moyens de préhension verticalement vers le haut, le corps creux et le dispositif de transport sont susceptibles de se positionner relativement l'un par rapport à l'autre afin que le corps creux occupe une position déterminée de référence dans laquelle le col est aligné verticalement par rapport aux moyens de préhension, suivant l'axe principal du dispositif de transport.

Avantageusement, la libération d'un corps creux orienté « col en haut » est obtenue simplement par gravité. La remontée de la tige provoque la cessation de la sollicitation, par le champ magnétique, des moyens de préhension vers la position déployée et de préférence des moyens de rappel provoquent automatiquement le retour des moyens de préhension vers la position rétractée, libérant le corps creux jusqu'alors maintenu par l'intérieur de son col.

Grâce à l'actionnement des moyens de préhension par les moyens magnétiques selon l'invention, l'éjecteur présent dans les dispositifs de transport selon l'état de la technique peut être supprimé.

Avantageusement, la suppression d'un tel éjecteur permet de supprimer certains inconvénients qui lui sont associés comme le risque de détérioration du bord supérieur (buvant) du col dont les dimensions toujours plus réduites vont de pair avec une fragilité sans cesse accrue.

Avantageusement, la suppression de l'éjecteur laisse le bord supérieur du col entièrement libre pour réaliser d'autres fonctions notamment, selon les applications, un centrage des moyens de préhension par rapport au col du corps creux.

Selon d'autres caractéristiques de l'invention :
- lesdits moyens de préhension sont sollicités dans ladite position déployée par l'intermédiaire dudit champ magnétique ;
- lesdits moyens magnétiques d'actionnement des moyens de préhension comportent au moins des premiers moyens magnétiques qui provoquent sélectivement le changement de position desdits moyens de préhension, au moins de la position rétractée vers la position déployée, par application dudit champ magnétique sur les moyens de préhension ;
- lesdits premiers moyens magnétiques sont montés sur un support du dispositif par rapport auquel la tige est montée mobile verticalement de manière que lesdits premiers moyens magnétiques provoquent le changement de position desdits moyens de préhension depuis la position rétractée vers la position déployée lorsque la tige, déplacée verticalement vers le bas depuis sa position haute, atteint sa position basse ;
- lesdits premiers moyens magnétiques sont agencés sur le support du dispositif pour produire un champ magnétique circonférentiellement continu ;
- les premiers moyens magnétiques sont constitués par des aimants permanents ;
- les moyens de préhension sont rappelés automatiquement vers la position rétractée par des moyens de rappel ;
- les moyens magnétiques d'actionnement des moyens de préhension comportent des deuxièmes moyens magnétiques qui sont portés par lesdits moyens de préhension ;
- les deuxièmes moyens magnétiques sont agencés relativement aux premiers moyens magnétiques pour présenter une polarité identique à celle desdits premiers moyens magnétiques de manière à exercer réciproquement les uns sur les autres une force magnétique de répulsion ;
- les moyens de rappel des moyens de préhension vers la position rétractée sont constitués par lesdits deuxièmes moyens magnétiques ;
- les deuxièmes moyens magnétiques sont constitués par des aimants permanents ;
- en position déployée, lesdits deuxièmes moyens magnétiques portés par les moyens de préhension sont décalés, verticalement vers le bas, par rapport auxdits premiers moyens magnétiques portés par le support ;
- les moyens de préhension sont montés mobiles en rotation entre lesdites positions rétractée et déployée autour d'un axe ;
- les moyens de préhension sont constitués par des leviers, chaque levier comportant verticalement de part et d'autre dudit axe de rotation une partie supérieure d'actionnement et une partie inférieure de préhension qui sont reliées par une partie intermédiaire de liaison comportant ledit axe ;
- le dispositif comporte des moyens de butée qui déterminent la position rétractée des moyens de préhension.

D'autres caractéristiques et avantages de la présente invention apparaîtront à la lecture de la description détaillée qui va suivre pour la compréhension de laquelle on se reportera aux dessins dans lesquels :
- la figure 1 est une vue en coupe verticale qui représente un exemple de corps creux muni d'un col et illustre selon cet exemple une préforme ainsi que le récipient (bouteille) susceptible d'être fabriqué à partir d'une telle préforme en matière thermoplastique ;
- la figure 2 est une vue de face qui représente un dispositif de transport comportant des moyens de préhension actionnés magnétiquement selon un mode de réalisation de l'invention ;
- la figure 3 est une vue en perspective avec éclaté qui représente en détail la partie inférieure du dispositif de transport selon la figure 2, ladite partie inférieure (ou « nez de tournette ») comportant lesdits moyens de préhension étant démontable par rapport à la tige;
- les figures 4 et 5 sont des vues en coupe qui représentent la partie inférieure de préhension du dispositif de transport selon la figure 3, la figure 4 représentant une coupe radiale réalisée verticalement à la hauteur des deuxièmes moyens magnétiques qui sont solidaires des moyens de préhension et illustrant le plan vertical de coupe correspondant à la figure 5, la figure 5 illustrant en coupe ladite partie inférieure avec lesdits moyens de préhension occupant la position rétractée ;
- les figures 6 et 7 sont des vues en coupe qui représentent la partie inférieure de préhension du dispositif de transport selon la figure 3, la figure 6 représentant une coupe radiale réalisée à la hauteur des deuxièmes moyens magnétiques qui sont solidaires des moyens de préhension et illustrant le plan vertical de coupe correspondant à la figure 7, la figure 7 illustrant en coupe ladite partie inférieure avec lesdits moyens de préhension occupant la position déployée ;
- les figures 8 à 10 sont des vues en coupe qui représentent le dispositif de transport selon le mode de réalisation et qui illustrent les positions de fonctionnement successivement occupées pour réaliser la préhension (ou la libération) d'un corps creux muni d'un col, tel qu'une préforme ou un récipient selon la figure 1.

Dans la suite de la description, on adoptera à titre non limitatif et pour en faciliter la compréhension les orientations « verticale » suivant l'axe X du dispositif et « radiale » orthogonalement audit axe, l'orientation « verticale » étant donnée par convention et sans référence aucune à la gravité terrestre.

On utilisera à titre non limitatif les termes « haut » ou « bas » ainsi que « supérieur » ou « inférieur » en référence à l'orientation verticale, et « extérieur » ou « intérieur » en référence à l'orientation radiale et par rapport à l'axe X pour le dispositif de transport ou l'axe O pour le corps creux.

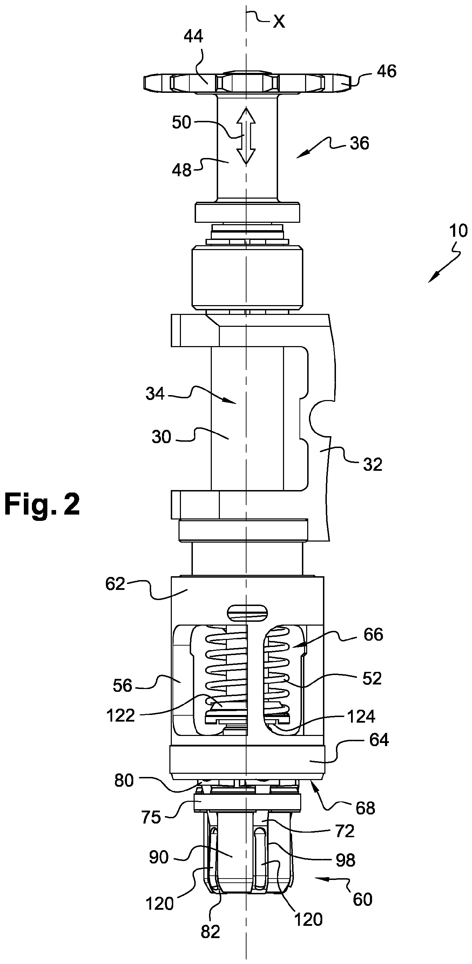

Les figures 2 à 10 représentent un dispositif 10 de transport d'un corps creux selon un mode de réalisation de l'invention.

Un dispositif 10 de transport selon l'invention est en particulier utilisé pour transporter individuellement un corps creux en matière thermoplastique formé par une préforme 12 dans un four (non représenté) d'une installation de fabrication de récipients.

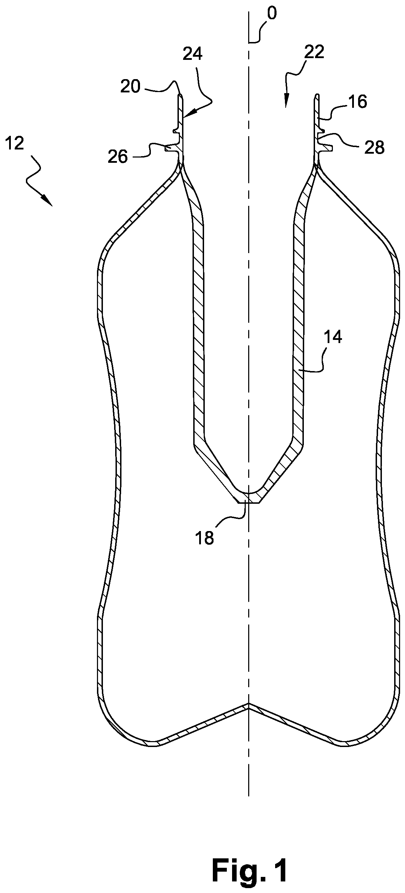

On a représenté à la figure 1 en coupe verticale, un exemple non limitatif de réalisation de corps creux constitué initialement par une préforme 12 en matière thermoplastique qui est destinée à être transformée ultérieurement en un récipient, tel qu'une bouteille représentée également sur la figure 1.

Dans la description, le terme « récipient » désigne de manière non limitative un récipient final comme un récipient dit intermédiaire (encore appelé ébauche).

La préforme 12 en matière thermoplastique comme le PET est par exemple conditionnée thermiquement dans le four de l'installation, et cela préalablement à sa transformation en récipient réalisée par soufflage (ou étirage-soufflage) de ladite préforme dans un moule, au moyen d'au moins un fluide sous pression généralement constitué par de l'air.

On rappelle qu'une préforme 12 est généralement fabriquée par injection de matière thermoplastique dans un moule et que la préforme 12 obtenue comporte un col à sa forme définitive, c'est à dire identique à celui du récipient final.

Par conséquent, un dispositif 10 de transport est apte à assurer indifféremment, pour un col d'un diamètre donné, la préhension de la préforme 12 comme celle du récipient final, grâce à quoi le dispositif 10 de transport selon l'invention peut être utilisé dans l'ensemble d'une telle installation.

Ainsi qu'on l'aura compris, l'utilisation d'un dispositif 10 de transport selon l'invention n'est donc nullement limitée à celui d'une préforme, de surcroît pas à celui de préformes dans un four qui ne constitue qu'un exemple d'application.

Tel que représenté sur la figure 1, la préforme 12 présente un axe O principal qui s'étend ici selon la direction verticale.

La préforme 12 comporte un corps 14 vertical muni à une extrémité d'un col 16 et fermé à l'extrémité opposée par un fond 18.

Le col 16 comporte un bord 20 (ou buvant) qui délimite circonférentiellement une ouverture 22 d'accès à l'intérieur du corps 14 creux de la préforme 12 et comporte une paroi 24 interne. Sur la figure 1, ladite paroi 24 interne est cylindrique et s'étend verticalement de manière rectiligne avec un diamètre interne sensiblement constant.

En variante, la paroi 24 interne du col 16 est légèrement inclinée par rapport à la verticale et/ou la paroi 24 interne est étagée, avec une variation du diamètre interne.

Dans l'exemple de réalisation représenté à la figure 1, le col 16 comporte une collerette 26 qui s'étend radialement vers l'extérieur, en saillie par rapport au corps 14, et qui délimite verticalement une zone de jonction du col 16 avec le corps 14.

Selon cet exemple, le col 16 comporte à l'extérieur un filetage destiné à permettre la fermeture ultérieure du récipient par un bouchon à vis complémentaire et comporte encore une gorge 28 annulaire destinée à recevoir une bague d'inviolabilité.

Dans le cas de l'application particulière au transport d'une préforme 12 dans le four d'une installation de fabrication de récipients, le col 16 ayant sa forme définitive, seul le corps 14 de la préforme 12 est chauffé par des moyens de chauffage en vue d'en ramollir la matière constitutive, tels que des lampes halogènes ou des moyens équivalents.

Tel que représenté notamment sur la figure 2, le dispositif 10 de transport comporte un corps 30 qui forme un référentiel fixe par rapport aux autres pièces mobiles du dispositif 10.

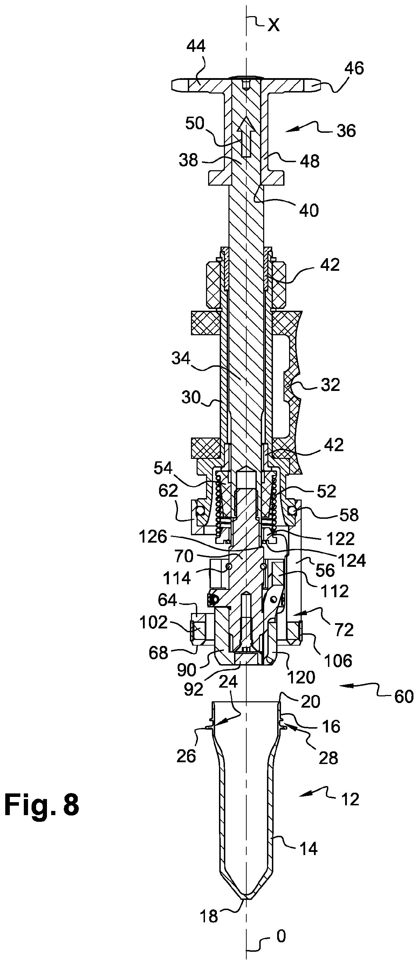

Le dispositif 10 de transport est représenté en coupe sur les figures 8 à 10 auxquelles on se reportera avantageusement.

Le corps 30 comporte une pièce 32 de liaison qui est apte à être liée en déplacement à un système de transport, tel qu'une chaîne ou une courroie, de manière à permettre l'entraînement du dispositif 10 de transport, notamment suivant un parcours de chauffe déterminé à l'intérieur du four.

Le dispositif 10 de transport comporte au moins une tige 34, dite de commande, qui est montée mobile verticalement par rapport au corps 30 suivant l'axe X du dispositif 10 de transport.

Le dispositif 10 de transport comporte une pièce 36 d'entraînement de la tige 34 de commande.

La pièce 36 d'entraînement est traversée centralement par une partie 38 supérieure de la tige 34 qui, de section inférieure à celle de la partie de la tige 34 coulissant verticalement dans le corps 30, délimite un épaulement 40 pour ladite pièce 36 d'entraînement.

La pièce 36 d'entraînement est liée en déplacement à ladite tige 34, d'une part verticalement et, d'autre part, en rotation autour de l'axe X principal du dispositif 10 de transport.

De préférence, des coussinets 42 sont interposés entre le corps 30 et la tige 34, par exemple à chaque extrémité supérieure et inférieure du corps 30.

La pièce 36 d'entraînement présente globalement en coupe verticale une forme en « T » et comporte respectivement une partie d'orientation radiale à partir de laquelle s'étend vers le bas une autre partie d'orientation verticale.

La partie radiale est formée par un pignon 44 comportant circonférentiellement une denture 46 destinée à coopérer avec des moyens d'engrènement (non représentés) complémentaires pour entraîner en rotation la tige 34 autour de l'axe X.

Le pignon 44 a pour fonction, par l'intermédiaire de la tige 34, d'entraîner en rotation sur elle-même la préforme 12 qui est transportée individuellement par le dispositif 10.

Une telle fonction trouve notamment application dans le conditionnement thermique des préformes 12 dans le four d'une installation de fabrication de récipients.

La mise en rotation de la préforme 12 sur elle-même sur au moins une partie du parcours de chauffe dans le four est destinée à obtenir un conditionnement thermique homogène de la préforme 12. Subsidiairement, c'est la raison pour laquelle un tel dispositif 10 de transport est parfois également appelé « tournette ».

La partie verticale de la pièce 36 d'entraînement de la tige 34 forme un moyeu 48 qui est destiné à coopérer avec des moyens 50 d'actionnement associés.

Les moyens 50 d'actionnement sont destinés à commander sélectivement le déplacement vertical de la tige 34 de commande, ladite tige 34 étant montée coulissante par rapport au corps 30.

Les moyens 50 d'actionnement de la tige 34 comportent par exemple une fourchette qui coopère avec le moyeu 48 pour le déplacer verticalement et qui est commandée sélectivement à cet effet par un actionneur, tel qu'un mécanisme à came et à galet.

Les moyens 50 d'actionnement de la tige 34 sont représentés schématiquement par une double flèche sur la figure 2, puis sur les figures 8 à 10 les flèches correspondent au sens de déplacement de la tige 34, déplacée par lesdits moyens 50, verticalement au moins vers le haut.

Avantageusement, la tige 34 est montée mobile verticalement suivant l'axe X entre au moins une première position, dite position basse, et une deuxième position, dite position haute.

De préférence, la tige 34 est montée mobile verticalement vers le haut à l'encontre d'un organe 52 de rappel de la tige vers la position basse. L'organe 52 de rappel est par exemple formé ici par un ressort qui, en appui sur le corps 30, sollicite la tige 34 vers sa position basse.

En fonction de l'effort appliqué par les moyens 50 d'actionnement sur le moyeu 48 de la pièce 36 d'entraînement, le ressort 52 rappelle automatiquement la tige 34 de commande vers la position basse.

Les moyens 50 d'actionnement commandent seulement le déplacement vertical de la tige 34 de la position basse vers la position haute, en exerçant sur la tige 34 un effort de traction supérieur à l'effort de rappel exercé par le ressort 52.

Avantageusement, le déplacement vertical vers le bas de la tige 34, de la position haute vers la position basse, est ensuite obtenu automatiquement grâce au ressort 52 de rappel de la tige en cessant d'appliquer sur la pièce 36 d'entraînement ledit effort de traction.

En variante, en l'absence d'un tel ressort 52 de rappel de la tige 34, les moyens 50 d'actionnement commandent le déplacement vertical de la tige 34 vers l'une et l'autre desdites positions haute et basse.

Le ressort 52 de rappel de la tige s'étend verticalement autour d'une partie inférieure de la tige 34 qui le traverse centralement, l'extrémité supérieure du ressort 52 est en appui sur une bague 54 également traversée par la tige 34 qui coulisse.

La bague 54 est immobilisée verticalement vers le haut par le corps 30, ladite bague 54 étant en appui sur le corps 30 avec interposition d'une partie d'orientation radiale du coussinet 42 inférieur.

Le dispositif 10 de transport comporte un support 56 dont la partie supérieure est rapportée à fixation sur le corps 30, par exemple ici par emboîtement élastique au moyen d'un joint 58 (voir figure 8) reçu dans une gorge (non visible) ménagée à l'intérieur de la partie supérieure du support 56.

Le dispositif 10 de transport comporte des moyens 60 de préhension destinés à coopérer avec la paroi 24 interne pour assurer la préhension du corps creux par l'intérieur du col 16, ici la préhension individuelle de la préforme 12.

Grâce aux moyens 60 de préhension selon l'invention, la pièce correspondant à l'éjecteur dans un dispositif de transport de l'état de la technique peut être avantageusement supprimée.

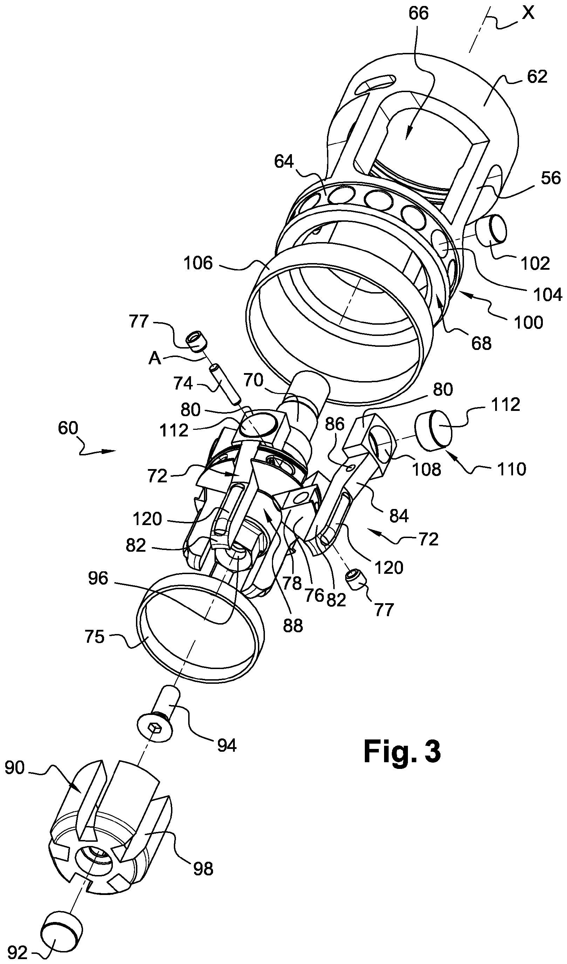

Toutefois, dans le mode de réalisation décrit ci-après et illustré en détail par la figure 3, le support 56 est constitué par une pièce similaire à un tel éjecteur, bien que ladite pièce soit désormais dénuée de cette fonction d'éjection du corps creux à l'issue du transport.

Avantageusement, l'invention est donc susceptible d'être mise en oeuvre dans un dispositif 10 de transport existant dans lequel l'éjecteur serait remplacé par un support 56 et de nouveaux moyens 60 de préhension montés à l'extrémité libre de la tige 34 de commande.

Le support 56 est une pièce facilement et rapidement démontable notamment pour faciliter l'accès aux moyens 60 de préhension.

De préférence, un tel support 56 amovible facilite toute intervention sur lesdits moyens 60 de préhension comme par exemple leur changement pour d'autres moyens 60 de préhension dans le cas d'une mise en fabrication d'un autre récipient ayant un col présentant des caractéristiques différentes de diamètre.

Tel qu'illustré sur la figure 2, le support 56 est une pièce cylindrique qui, localement ajourée, délimite un volume à l'intérieur duquel sont reçus au moins une partie des moyens 60 de préhension du dispositif 10 de transport.

Le support 56 comporte un bord 62 supérieur, ici circonférentiellement continu, pour sa fixation au corps 30 au moyen du joint 58. Le support 56 comporte un bord 64 inférieur qui est de préférence circonférentiellement continu.

En fonction de la position verticale de la tige 34 (voir figures 8 à 10), les moyens 60 de préhension sont totalement ou partiellement escamotés à l'intérieur d'un logement 66 du support 56 de manière à permettre notamment l'introduction radiale d'un col 16 de préforme 12 à l'aplomb des moyens 60 de préhension.

Les moyens 60 de préhension sont montés à l'extrémité inférieure de la tige 34 de commande à laquelle lesdits moyens 60 de préhension sont liés verticalement en déplacement.

De préférence, les moyens 60 de préhension sont amovibles et rapportés à fixation sur l'extrémité de la tige 34, par exemple ici par vissage.

En variante, les moyens 60 de préhension sont fixés à l'extrémité de la tige 34 par tout autre moyen de fixation approprié tel qu'un montage à baïonnette.

En position basse de la tige 34 tel qu'illustré sur la figure 2, les moyens 60 de préhension s'étendent verticalement au-delà d'une face 68 radiale du bord 64 inférieur du support 56 de manière à pouvoir être introduits à l'intérieur du col 16 de la préforme12 sans interférence avec le support 56.

La tige 34 du dispositif 10 de transport comporte un embout 70 comportant les moyens 60 de préhension, ledit embout 70 comprenant une extrémité supérieure filetée qui est destinée à être reçue dans un trou taraudé complémentaire de la tige 34, ménagé centralement à son extrémité inférieure.

Avantageusement, la partie inférieure (encore appelée "nez de tournette") de la tige 34 formée par l'embout 70 comportant fonctionnellement les moyens 60 de préhension du col 16, est ainsi la seule partie du dispositif 10 à démonter.

Les moyens 60 de préhension sont solidaires de la tige 34 par l'intermédiaire dudit embout 70 et les moyens 60 de préhension portés par l'embout 70 sont liés verticalement en déplacement à la tige 34.

Les moyens 60 de préhension sont entraînés verticalement vers le haut par la tige 34 de commande lorsque la tige 34 est déplacée vers sa position haute par les moyens 50 d'actionnement, à l'encontre des moyens de rappel formés par le ressort 52.

Tel qu'indiqué précédemment, l'escamotage des moyens 60 de préhension a notamment pour but de permettre l'introduction radiale du col 16 de la préforme 12 dans une position déterminée de référence par rapport au dispositif 10 de transport et plus particulièrement par rapport auxdits moyens 60 de préhension.

Avantageusement, la course fonctionnelle de la tige 34 entre les positions basse et haute est d'autant plus réduite que le col 16 de la préforme 12 se situe dans ladite position déterminée de référence proche des moyens 60 de préhension.

La position déterminée de référence du col 16 correspond à une position illustrée à la figure 8 dans laquelle le col 16 est aligné verticalement par rapport aux moyens 60 de préhension, l'axe O de la préforme 12 étant avantageusement confondu avec l'axe X principal du dispositif 10 de transport.

La préforme 12 étant dans ladite position de référence et orientée dans une position dite "col en haut" dans laquelle le corps 14 s'étend verticalement en dessous du col 16, le col 16 se trouve placé verticalement en dessous, à l'aplomb des moyens 60 de préhension.

Grâce à l'escamotage des moyens 60 de préhension, le col 16 peut être amené au plus près pour occuper ladite position de référence sans qu'il n'y ait d'interférences entre le col 16 et les moyens 60 de préhension (ou encore le support 56).

Avantageusement, les courses verticales de la tige 34 pour réaliser tant la préhension que la libération de la préforme 12 par les moyens 60 de préhension s'en trouvent parallèlement réduites.

En position basse de la tige 34, les moyens 60 de préhension coopèrent radialement avec la paroi 24 interne du col 16 pour assurer la préhension de la préforme 12.

Les moyens 60 de préhension sont montés mobiles radialement entre :
- une position rétractée dans laquelle les moyens 60 de préhension sont introduits verticalement de haut en bas à l'intérieur du col 16, sans contact avec la paroi 24 interne, et
- une position déployée dans laquelle les moyens 60 de préhension coopèrent avec la paroi 24 interne du col 16.

Le changement de position des moyens 60 de préhension d'au moins l'une vers l'autre desdites positions rétractée et déployée est actionné par un champ magnétique.

Le champ magnétique agissant sur les moyens 60 de préhension étant produit par des moyens magnétiques.

Dans le mode de réalisation illustré notamment par les figures 3 à 7, les moyens 60 de préhension sont montés mobiles en rotation entre lesdites positions rétractée et déployée autour d'un axe A, lequel axe A est compris dans un plan radial orthogonal à l'axe X de la tige 34.

Selon ce mode de réalisation, les moyens 60 de préhension sont constitués par des leviers 72 qui sont montés pivotants autour de moyens 74 d'articulation définissant l'axe A de rotation.

De préférence, les leviers 72 sont répartis circonférentiellement de manière régulière autour de l'embout 70 de la tige 34 qui est ici rapporté à fixation par vissage sur l'extrémité libre inférieure de la tige 34.

L'embout 70 comporte une partie 76 annulaire qui s'étend radialement en saillie vers l'extérieur. La partie 76 annulaire comporte circonférentiellement une série de logements 78 dans chacun desquels est monté un levier 72 et les moyens 74 d'articulation qui lui sont associés.

De préférence, l'ensemble des leviers 72 est bloqué dans les logements 78 par un anneau 75 élastique qui entoure la partie 76 annulaire et ferme chacun des logements 78 qui est ouvert au moins radialement vers l'extérieur.

Chaque levier 72 comporte, verticalement de part et d'autre dudit axe A de rotation, une partie 80 supérieure d'actionnement et une partie 82 inférieure de préhension qui sont reliées par une partie 84 intermédiaire de liaison.

Le levier 72 constitue un levier dit du premier type dans lequel l'axe est situé entre la force motrice et la force résistante, comme par exemple dans une balance romaine.

Avantageusement, l'effort appliqué sur la partie supérieure 80 d'actionnement du levier par les moyens magnétiques est amplifié par le bras de levier, ce qui accroît l'effort de préhension appliqué à l'opposé par la partie 82 inférieure de préhension.

La partie 84 intermédiaire de liaison de chaque levier 72 est reçue dans un des logements 78 de la partie 76 annulaire de l'embout 70 de la tige 34 et ceinturée par ledit anneau 75 élastique.

Chaque levier 72 comporte un perçage 86 pour le passage traversant des moyens 74 d'articulation suivant ledit axe A.

Les moyens 74 d'articulation sont constitués par un axe qui traverse le levier 72 de part en part au niveau du perçage 86, ledit axe 74 étant maintenu dans la partie 76 annulaire par des moyens 77 de blocage disposés à chacune de ses extrémités pour le bloquer en translation.

Les leviers 72 sont portés par la partie 76 annulaire de l'embout et ce faisant liés en déplacement à la tige 34, chaque levier 72 demeurant libre de pivoter autour des moyens 74 d'articulation, respectivement entre lesdites positions rétractée et déployée.

Avantageusement, le dispositif 10 comporte des moyens 88 de butée qui déterminent la position rétractée des moyens 60 de préhension.

De préférence, les moyens 60 de préhension sont rappelés automatiquement vers ladite position rétractée et en appui contre lesdits moyens 88 de butée.

Les moyens 88 de butée sont formés par une partie de la surface externe de l'embout 70 de la tige 34 de commande qui, adjacente et située verticalement en dessous de la partie 76 annulaire, coopère avec une face 85 d'appui que comporte chaque levier 72 radialement à l'intérieur.

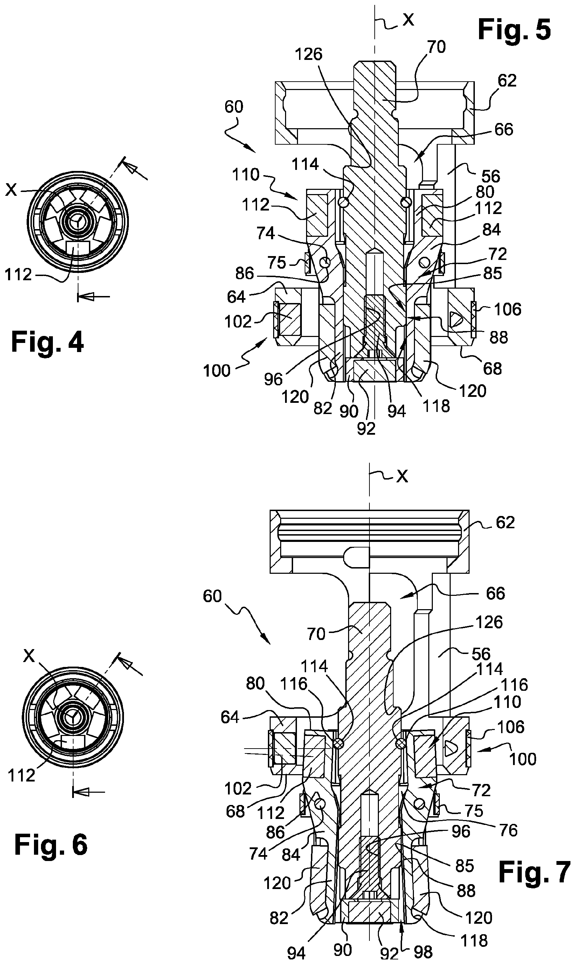

Tel qu'illustré plus particulièrement sur la coupe verticale de la figure 5 représentant les leviers 72 en position rétractée, chaque levier 72 rappelé automatiquement vers sa position rétractée est en butée par sa face 85 d'appui contre une partie radialement en vis à vis de la surface externe cylindrique de l'embout 70 de la tige 34 formant lesdits moyens 88 de butée.

En position rétractée, chaque levier 72 s'étend verticalement, globalement parallèlement à la tige 34 et l'axe X du dispositif 10 de transport.

La position rétractée des leviers 72 détermine un diamètre externe minimal des moyens 60 de préhension pour lequel lesdits moyens 60 de préhension sont susceptibles d'être introduits verticalement à l'intérieur d'un col 16 de préforme 12, sans contact avec la paroi 24 interne.

De préférence, le dispositif 10 comporte des moyens 90 de centrage destinés à coopérer avec une partie du col 16 et qui sont introduits à l'intérieur du col 16 de la préforme 12 avec les moyens 60 de préhension.

Les moyens 90 de centrage sont par exemple formés par un centreur qui, avantageusement amovible, est fixé à l'extrémité inférieure de l'embout 70 de la tige 34.

De préférence, la fixation entre le centreur formant les moyens 90 de centrage et l'embout 70 de la tige 34 est réalisée ici au moyen d'un aimant 92 permanent.

L'embout 70 est de préférence réalisé dans un matériau non magnétique, tel que de l'inox, pour limiter les perturbations du champ magnétique.

Le maintien du centreur 90 par l'aimant 92 est par exemple obtenu au moyen d'une vis 94 qui, fabriquée dans un matériau ferromagnétique, est reçue dans un trou 96 s'étendant verticalement à l'intérieur de l'extrémité inférieure de l'embout 70 de la tige 34.

La force d'attraction exercée par l'aimant 92 sur la tête de la vis 94 permet la fixation du centreur 90 à l'embout et donc à la tige 34.

De tels moyens de fixation magnétique présente l'avantage de permettre d'effectuer très rapidement et sans outil une opération de montage ou de démontage du centreur 90.

En variante, les moyens 90 de centrage sont fixés par tout autre moyen sur l'extrémité de l'embout 70 de la tige 34.

A titre d'exemple, une fixation par vissage pourrait être obtenue au moyen d'une vis (analogue à la vis 94) dont le corps serait reçu dans un trou taraudé complémentaire (comme le trou 96) et dont la tête serait en appui sur une partie des moyens 90 de centrage, telle qu'un lamage.

Les moyens 90 de centrage comportent des fentes 98 verticales réparties circonférentiellement de manière régulière et s'étendant verticalement de manière rectiligne qui sont destinées à recevoir chacune l'un des leviers 72, lesdits leviers 72 étant libres notamment de se déployer radialement vers l'extérieur.

Tel qu'illustré sur la figure 2, les moyens 90 de centrage et les moyens 60 de préhension sont une fois assemblés respectivement imbriqués l'un dans l'autre.

De préférence, le nombre N de leviers 72 est un nombre impair, le nombre N est par exemple compris entre 3 et 7.

Avantageusement, les moyens 60 de préhension selon le mode de réalisation comportent cinq leviers 72, répartis sur le pourtour de l'embout 70 de la tige 34.

Les moyens magnétiques d'actionnement des moyens 60 de préhension selon l'invention comportent au moins des premiers moyens 100 magnétiques.

Les premiers moyens 100 magnétiques sont destinés à actionner lesdits moyens 60 de préhension grâce à un champ magnétique.

Les premiers moyens 100 magnétiques sont aptes à provoquer sélectivement le changement de position desdits moyens 60 de préhension, au moins de la position rétractée vers la position déployée, par application du champ magnétique.

De préférence, les premiers moyens 100 magnétiques sont formés par des aimants 102 permanents.

En variante, les premiers moyens 100 magnétiques sont formés par au moins un électro-aimant.

De préférence, les premiers moyens 100 magnétiques sont agencés radialement à l'extérieur des moyens 60 de préhension et sont par exemple portés par le support 56 du dispositif 10.

Tel qu'illustré par la figure 3, les aimants 102 formant les premiers moyens 100 magnétiques sont chacun montés dans un logement 104 ménagé dans le bord 64 inférieur du support 56.

De préférence, les logements 104 sont seulement ouverts radialement vers l'extérieur et une bague 106 élastique bloque radialement les aimants 102 dans les logements 104.

En variante, la bague 106 élastique peut être supprimée en fixant chaque aimant 102 dans son logement 104 par collage, sertissage ou en moulant les aimants 102 avec le support 56.

De préférence, les aimants 102 sont agencés circonférentiellement sur tout le pourtour du support 56 et les aimants 102 sont juxtaposés, à proximité les uns des autres, avec un espace entre eux aussi réduit que possible.

A titre d'exemple non limitatif, le nombre d'aimants 102 est ici de seize, répartis régulièrement dans le bord 64 du support 56.

Avantageusement, les aimants 102 génèrent un champ magnétique en direction des moyens 60 de préhension qui est annulaire, globalement continu circonférentiellement.

Le champ magnétique produit par l'ensemble des aimants 102 qui agit sur les moyens 60 de préhension est par conséquent sensiblement le même quelle que soit la position angulaire relative des leviers 72 formant les moyens 60 de préhension par rapport aux aimants 102 portés par le support 56.

Ainsi, lorsque la tige 34 est entraînée en rotation autour de l'axe X par l'intermédiaire du pignon 44 de la pièce 36 d'entraînement, la position angulaire de chaque levier 72 relativement aux aimants 102 ne cesse de varier mais le champ magnétique qui sollicite les leviers 72 demeure sensiblement identique.

Avantageusement, l'entraînement en rotation d'une préforme 12 par l'intermédiaire des moyens 60 de préhension liés à la tige 34 s'effectue sans heurt, sans que pour chaque levier 72 le champ magnétique le sollicitant vers la position déployée ne varie lors du passage du champ magnétique produit par un aimant 102 au champ magnétique produit par l'aimant 102 suivant.

La transition entre le champ magnétique d'un aimant 102 donné au champ magnétique de l'aimant 102 lui succédant s'effectue sans rupture ou modification du champ et évite par conséquent un effet de « cran » qui, à défaut, pourrait survenir lors de l'entraînement en rotation des moyens 60 de préhension et du passage du champ magnétique d'un aimant 102 à celui de l'aimant 102 suivant.

Le champ magnétique global produit par les premiers moyens 100 magnétiques maintient en permanence les moyens 60 de préhension en position déployée, quelle que soit la position angulaire du levier 72 entraîné en rotation par la tige 34.

Dans le mode de réalisation, les moyens magnétiques d'actionnement des moyens 60 de préhension comportent avantageusement des deuxièmes moyens 110 magnétiques qui sont portés par les leviers 72 formant lesdits moyens 60 de préhension.

Les deuxièmes moyens 110 magnétiques sont liés en déplacement aux leviers 72 formant lesdits moyens 60 de préhension qui pivotent entre lesdites positions rétractée et déployée.

Avantageusement, les deuxièmes moyens 110 magnétiques sont formés par des aimants 112 permanents.

Chaque levier 72 comporte dans sa partie 80 supérieure d'actionnement un boitier comportant un logement 108 dans lequel est monté l'un des aimants 112 formant les deuxièmes moyens 110 magnétiques.

Avantageusement, les aimants 112 sont moulés avec la partie 80 supérieure des leviers 72, en variante maintenus dans les logements 108 par tous moyens de fixation appropriés.

Les deuxièmes moyens 110 magnétiques sont agencés relativement aux premiers moyens 100 magnétiques pour présenter une polarité identique à la polarité desdits premiers moyens 100 magnétiques de manière à obtenir une force de répulsion lorsque les premiers moyens 100 magnétiques et les deuxièmes moyens 110 magnétiques sont amenés face à face, globalement alignés verticalement.

On rappelle la règle selon laquelle : lorsque l'une des extrémités d'un élément magnétique, tel qu'un des aimants 102, est approchée de l'une extrémité d'un autre élément magnétique, tel que l'un des aimants 112, il se produit alors entre eux une force de répulsion si les extrémités mises en présence ont des polarités identiques (ou inversement une force d'attraction si leurs polarités sont opposées).

Lorsque les deuxièmes moyens 110 magnétiques formés par les aimants 112 se trouvent radialement en vis-à-vis des premiers moyens 100 magnétiques formés par les aimants 102, ici suite au déplacement vertical de la tige 34 relativement au support 56, les aimants 102 et 112 exercent alors réciproquement les uns sur les autres une force magnétique de répulsion.

Dans le mode de réalisation, lorsque la tige 34 est déplacée verticalement vers le bas depuis sa position haute représentée sur la figure 5 jusqu'à sa position basse représentée sur la figure 7, les premiers moyens 100 magnétiques provoquent alors automatiquement par répulsion le changement de position desdits moyens 60 de préhension depuis la position rétractée vers la position déployée.

Lorsque la tige 34 atteint sa position basse, les aimants 102 exercent une force magnétique de répulsion sur chaque aimant 112 porté par l'un des leviers 72 et réciproquement les aimants 112 exercent également sur les aimants 102 une force de répulsion magnétique.

Les forces mutuelles de répulsion s'exerçant entre les aimants 102 et 112 provoquent le changement de position des moyens 60 de préhension formés par les leviers 72 qui pivotent vers la position déployée dans laquelle la partie 82 inférieure de préhension de chaque levier 72 est apte à coopérer avec la paroi 24 interne du col 16 d'une préforme 12 pour en assurer la préhension.

Avantageusement, les moyens 60 de préhension sont sollicités dans ladite position déployée par un champ magnétique.

De préférence, ledit champ magnétique est une force de répulsion produite conjointement par lesdits premiers moyens 100 magnétiques et par les deuxièmes moyens 110 magnétiques.

De préférence, les moyens 60 de préhension sont rappelés automatiquement vers la position rétractée par des moyens de rappel.

Avantageusement, les moyens de rappel des moyens 60 de préhension vers la position rétractée sont constitués par lesdits deuxièmes moyens 110 magnétiques.

Chaque aimant 110 porté par un levier 72 exerce sur une partie des autres aimants 110 soumis à son champ magnétique une force de répulsion qui, orientée radialement vers l'extérieur, maintient chacun des leviers 72 dans sa position rétractée.

En effet, les aimants 110 présentent tous radialement à l'intérieur une même polarité de sorte que les aimants 110 portés par les leviers 72 vont se repousser les uns les autres.

En variante, les moyens 60 de préhension sont rappelés élastiquement vers la position rétractée, par exemple par l'intermédiaire de moyens de rappel constitués au moins un ressort associé à chaque levier 72.

Avantageusement, les leviers 72 formant les moyens 60 de préhension sont rappelés magnétiquement en position rétractée par la force de répulsion qu'exerce chacun des aimants 112 sur les autres aimants 112 présentant une même polarité et tout particulièrement ceux situés radialement globalement en vis-à-vis.

Hors du champ magnétique des premiers moyens 100 magnétiques, les forces de répulsion des aimants 112 s'exercent sur la partie 80 supérieure d'actionnement de chaque levier 72 comportant un aimant 112 et tendent à faire pivoter le levier 72 radialement vers l'extérieur autour de l'axe A qui est défini par les moyens 74 d'articulation, c'est-à-dire en sens inverse de la position déployée.

Les forces de répulsion à l'oeuvre rappellent chaque levier 72 dans sa position rétractée, ladite position rétractée étant déterminée par la venue en butée de la face 85 du levier 72 contre la partie de la surface externe de l'embout 70 située radialement en vis-à-vis, laquelle surface constitue les moyens 88 de butée de l'ensemble des leviers 72 dans le présent mode de réalisation.

Avantageusement, les deuxièmes moyens 110 magnétiques ont par conséquent une double fonction, d'une part une fonction de rappel des moyens 60 de préhension vers la position rétractée et, d'autre part une fonction dans l'actionnement des moyens 60 de préhension.

Les deuxièmes moyens 110 magnétiques interagissent par répulsion avec les premiers moyens 100 magnétiques et participent donc à provoquer par répulsion magnétique le changement de position des moyens 60 de préhension vers la position déployée, puis leur maintien dans ladite position déployée pour laquelle la préhension par son col 16 d'une préforme 12 est obtenue.

Dans le mode de réalisation, la position rétractée ou déployée qu'occupe un levier 72 est déterminée par l'intensité de des forces de répulsion s'appliquant audit levier.

Lorsque les deuxièmes moyens 110 magnétiques ne sont pas dans le champ magnétique des premiers moyens 100 magnétiques alors les leviers 72 sont uniquement soumis à la force de répulsion des aimants 112 et ce faisant sont rappelés magnétiquement vers la position rétractée.

En revanche, lorsque les deuxièmes moyens 110 magnétiques entrent dans le champ magnétique des premiers moyens 100 magnétiques, les leviers 72 sont alors sollicités par des forces de répulsion supérieures à celles les rappelant vers la position rétractée et le changement de position vers la position déployée obtenu.

L'intensité des forces de répulsion produite par le champ magnétique des premiers moyens 100 magnétiques doit donc être supérieure à celle produite par les deuxièmes moyens 110 magnétiques.

Dans le mode de réalisation, les aimants 102 et 112 sont de préférence identiques mais le nombre d'aimants 102 supérieur au nombre d'aimant 112 de manière à obtenir des forces magnétiques de répulsion pour l'actionnement qui soient supérieures à celles de rappel vers la position rétractée.

La figure 5 représente plus particulièrement les moyens 60 de préhension en position rétractée, position qui est notamment occupée lorsque la tige 34 est en position haute.

Lorsque la tige 34 est en position haute ou plus généralement dans une position différente de la position basse, les deuxièmes moyens 110 magnétiques formés par les aimants 112 des leviers 72 ne sont pas alignés radialement avec les premiers moyens 100 magnétiques formés par les aimants 102 portés par le support 56.

Dans la position illustrée à la figure 5, les leviers 72 sont rappelés magnétiquement vers la position rétractée par la force de répulsion qu'exercent les uns sur les autres les aimants 112 formant avantageusement les moyens de rappel des moyens 60 de préhension.

Dans cette position, le champ magnétique produit par les premiers moyens 100 magnétiques est sans effet sur les moyens 60 de préhension formés par les leviers 72 et plus particulièrement sur les deuxièmes moyens 110 magnétiques.

La figure 6 représente plus particulièrement les moyens 60 de préhension en position déployée, position qui est notamment occupée lorsque la tige 34 atteint sa position basse.

Lorsque la tige 34 est déplacée vers le bas, de sa position haute vers sa position basse, les deuxièmes moyens 110 magnétiques se déplacent simultanément vers le bas relativement aux premiers moyens 100 magnétiques portés par le support 56 qui sont fixes, lesdits deuxièmes moyens 110 magnétiques étant déplacés jusqu'à venir occuper, lorsque la tige 34 atteint ladite position basse, la position illustrée à la figure 6.

Lorsque la tige 34 est proche d'atteindre sa position basse, les aimants 112 portés par la partie supérieure 80 des leviers 72 rencontrent le champ magnétique des aimants 102.

Comme la force de répulsion qu'appliquent les aimants 102 aux moyens 60 de préhension est supérieure à la force de répulsion appliquée mutuellement entre eux par les aimants 112, l'effort de rappel magnétique des leviers 72 vers la position rétractée est vaincu et les leviers 72 pivotent vers la position déployée.

La force de répulsion produite par les aimants 102 est orientée radialement vers l'intérieur, soit de sens opposé à celle de rappel, et s'applique à la partie supérieure 80 d'actionnement de chaque levier 72 pour provoquer le changement de position des leviers 72.

Les forces de répulsion qui s'exercent alors entre chacun des aimants 112 porté par un levier 72 et l'ensemble des aimants 102 portés par le support 56 sont supérieures aux forces de répulsion qui rappelaient jusqu'alors chacun des leviers 72 dans sa position rétractée.

Parallèlement à la poursuite de la course de descente de la tige 34, les forces de répulsion vont vaincre l'effort de rappel exercé sur les leviers 72 et en provoquer le changement de position, les leviers 72 pivotant de la position rétractée vers la position déployée tel qu'illustré sur la figure 6 (en l'absence de préforme 12).

Avantageusement, dans la position déployée illustrée sur la figure 6, l'axe magnétique desdits premiers moyens 100 magnétiques portés par le support 56 est décalé verticalement par rapport à l'axe magnétique desdits deuxièmes moyens 110 magnétiques portés par les moyens 60 de préhension.

Tel qu'illustré sur la figure 7, l'axe magnétique desdits premiers moyens 100 magnétiques portés par le support 56 n'est donc pas confondu avec l'axe magnétique desdits deuxièmes moyens 110 magnétiques portés par les moyens 60 de préhension.

Les deuxièmes moyens 110 magnétiques sont en position déployée décalés verticalement vers le bas par rapport aux premiers moyens 100 magnétiques, soit avantageusement décalés verticalement dans le sens d'introduction des moyens 60 de préhension à l'intérieur du col 16 de la préforme 12.

Grâce à quoi, ladite position déployée des moyens 60 de préhension est une position stable, une position d'équilibre.

Avantageusement, les moyens 60 de préhension comportent des moyens 120 qui, déformables élastiquement, sont destinés à coopérer avec la paroi interne 24 du col 16 de la préforme 12.

De préférence, lesdits moyens 120 sont constitués par des patins. Dans le mode de réalisation, chaque levier 72 comporte un logement 118 qui est ménagé dans sa partie 82 inférieure pour recevoir ledit patin 120.

De préférence, les patins 120 sont par exemple réalisés en matière élastomère, telle que de la silicone alimentaire.

L'utilisation des patins 120 permet de réduire les risques de marquage du col 16 lors de la préhension du col 16 de la préforme 12.

Avantageusement, la déformation élastique des patins 120 permet également aux moyens 60 de préhension d'avoir une plus grande tolérance face aux variations des diamètres internes de col 16 des préformes 12, en particulier dans le cas de figure dit « col étroit ».

On décrira ci-après plus en détail le fonctionnement général du dispositif 10 de transport en référence aux figures 8 à 10 qui illustrent les positions lors de la préhension d'une préforme 12, opération qui est encore appelée « vêtissage ».

Dans une première étape, les moyens 50 d'actionnement tels qu'une fourchette agissent sur la pièce 36 d'entraînement en lui appliquant un effort de traction, orienté verticalement vers le haut et représenté schématiquement par une flèche.

L'effort de traction appliqué par les moyens 50 d'actionnement a pour effet de déplacer la tige 34 verticalement vers le haut, ladite tige coulissant de sa position basse jusqu'à atteindre la position haute illustrée à la figure 8.

De préférence et tel qu'indiqué précédemment, le déplacement de la tige 34 s'effectue alors à l'encontre des moyens de rappel de la tige 34 vers sa position basse, lesdits moyens de rappel étant constitués par le ressort 52.

Le ressort 52 de rappel de la tige 34 est en appui à son extrémité supérieure sur le support 56 par l'intermédiaire de la bague 54, ledit support 56 étant fixe et solidaire du corps 30.

Le ressort 52 de rappel de la tige 34 est lié en déplacement par une extrémité inférieure à la tige 34 qui se déplace verticalement relativement au support 56.

Le ressort 52 est en appui à son extrémité inférieure sur une bague 122 qui est immobilisée verticalement par un anneau 124 fendu qui, solidaire de la tige 34, est en butée contre un épaulement 126 (voir figures 5 et 7) que comporte l'embout 70 de la tige 34 de commande.

De préférence, les éléments d'appui du ressort 52 tels que l'anneau 124 ne sont pas réalisés dans des matériaux ferromagnétiques afin de ne pas provoquer d'interférence avec les moyens magnétiques.

Simultanément ou successivement à l'escamotage de la tige 34 vers sa position haute, une préforme 12 est amenée en position en vue de sa préhension par les moyens 60 de préhension du dispositif 10.

De préférence, la préforme 12 est introduite radialement et son col 16 positionné à l'aplomb des moyens 60 de préhension, l'axe O de la préforme 12 étant avantageusement confondu avec l'axe X du dispositif 10 de transport.

Dans cette position, la préforme 12 est par exemple supportée par sa collerette 26 qui en appui sur des moyens de transfert (non représentés), tels qu'une roue de transfert.

Dans une deuxième étape, lorsque la préforme 12 est en position, les moyens 50 d'actionnement cessent d'exercer ledit effort de traction sur la tige 34 et la tige 34 est alors automatiquement rappelée par le ressort 52 vers sa position basse.

Avantageusement, le poids de la fourchette formant les moyens 50 d'actionnement s'appliquant sur la pièce 36 d'entraînement et un effort de rappel orienté verticalement vers le bas par un ressort du mécanisme à came et à galet participent conjointement à rappeler automatiquement la tige 34 vers sa position basse.

Lors de la course de descente de la tige 34 de la position haute vers sa position basse, les moyens 60 de préhension occupant la position rétractée sont introduits sans contact à l'intérieur du col 16 de la préforme 12.

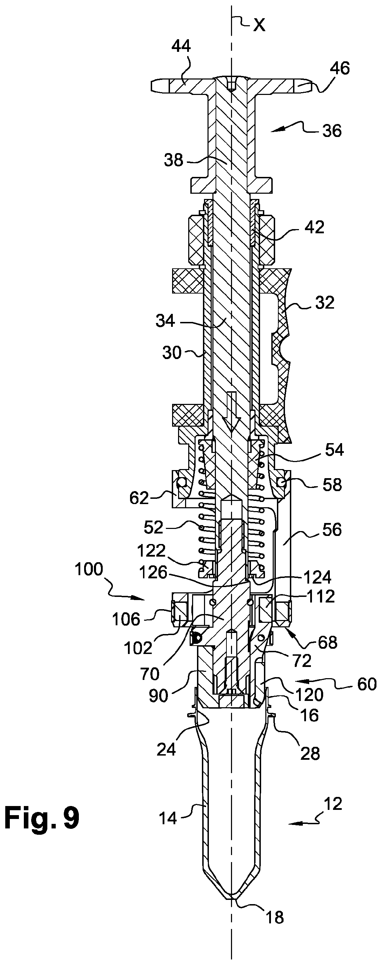

La position intermédiaire illustrée par la figure 9 représente les moyens 60 de préhension du dispositif 10 de transport juste avant que ne survienne le changement de position, de la position rétractée vers la position déployée.

Lors de l'introduction à l'intérieur du col 16, les moyens 90 de centrage ne sont pas en contact avec le col 16, le diamètre externe du centreur 90 étant avantageusement inférieur au diamètre interne du col 16 de la préforme 12.

La fin de course de la tige 34 jusqu'à sa position basse s'accompagne de l'actionnement des moyens 60 de préhension par le champ magnétique des moyens magnétiques.

Dans le mode de réalisation et tel que décrit précédemment en référence aux figures 5 et 7, les aimants 102 formant les premiers moyens 100 magnétiques portés par le support 56 et les aimants 112 formant les deuxièmes moyens 110 magnétiques portés par les leviers 72 exercent réciproquement les uns sur les autres des forces de répulsion qui, étant supérieures aux efforts de rappel des leviers 72 vers la position rétractée, provoquent le changement de position des leviers 72 vers la position déployée.

Avantageusement, le changement de position des moyens 60 de préhension de la position rétractée vers la position déployée est actionné par répulsion grâce à des moyens magnétiques, lors du déplacement vertical vers le bas de la tige 34.

Avantageusement, l'actionnement magnétique des moyens 60 de préhension pour réaliser la préhension est obtenu au cours d'un déplacement de même sens que celui de l'introduction des moyens 60 de préhension à l'intérieur du col 16.

Le changement de position desdits moyens 60 de préhension s'effectue à la fin de la course de la tige 34, une fois les moyens 60 de préhension introduits à l'intérieur dudit col 16 de la préforme 12.

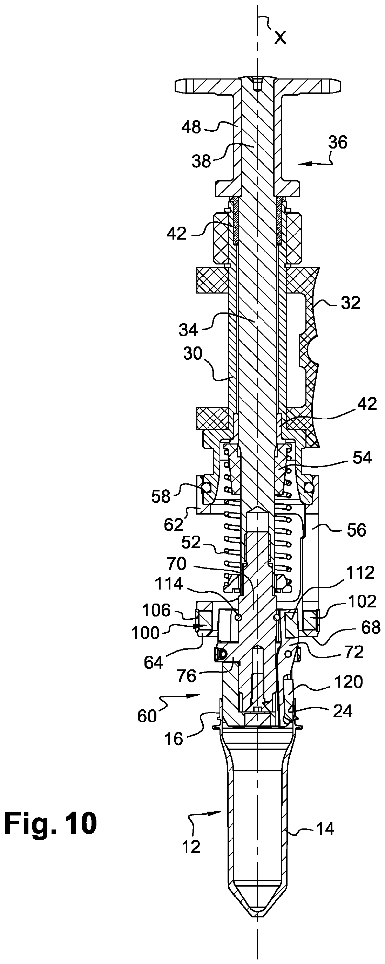

Tel que représenté à la figure 10, les moyens 60 de préhension formés par les leviers 72 étant introduits par l'ouverture 22 à l'intérieur du col 16 et occupant la position déployée, la préhension (ou vêtissage) de la préforme 12 est alors réalisée.

Les patins 120 portés par les leviers 72 coopèrent avantageusement avec la paroi 24 interne du col 16 de la préforme 12, les leviers 72 étant sollicités par répulsion vers la position déployée par l'intermédiaire du champ magnétique que produit par les premiers moyens 100 magnétiques en combinaison avec les deuxièmes moyens 110 magnétiques.

Pour réaliser la libération de la préforme 12, opération encore appelée « dévêtissage », on réalise de nouveau la première étape consistant à déplacer la tige 34 de sa position basse vers sa position haute.

Les moyens 50 d'actionnement sollicitent de nouveau en traction la pièce 36 d'entraînement pour déplacer la tige 34 de sa position basse vers sa position haute, et cela à l'encontre du ressort 52 de rappel de la tige 34 vers sa position basse.

Avantageusement, une très courte course de montée de la tige 34 suffit à modifier l'équilibre des forces magnétiques.

Ainsi, dès que les premiers moyens 100 magnétiques et les deuxièmes moyens 110 magnétiques vont être décalés verticalement les uns par rapport aux autres, les forces de répulsion appliquées jusqu'alors aux leviers 72 vont décroître jusqu'à devenir inférieure à celles appliqués par les moyens de rappel des leviers 72 vers la position rétractée.

Dans le mode de réalisation, les forces de répulsion exercées par les deuxièmes moyens 110 magnétiques provoquent alors automatiquement le rappel magnétique des leviers 72 vers la position rétractée et ce faisant libère la préforme 12 des moyens 60 de préhension liés en déplacement à la tige 34 du dispositif 10 de transport.

Avantageusement, lorsque la préforme 12 est dans une position dite « col en haut », la libération de la préforme 12 est facilitée par la gravité.

Lorsque la tige 34 atteint à nouveau sa position haute, les moyens 60 de préhension sont escamotés et le dispositif 10 de transport armé, prêt à réaliser la préhension d'une autre préforme 12.

Le mode de réalisation qui vient d'être décrit ne constitue qu'un exemple de réalisation préféré et donné à titre non limitatif, de nombreuses variantes étant susceptibles d'être réalisées sans toutefois sortir du cadre de l'invention.

On décrira ci-après de manière non limitative quelques variantes, en procédant parfois par comparaison avec le mode de réalisation des moyens 60 de préhension du dispositif 10 de transport représentés aux figures 2 à 10.

Dans le mode de réalisation, les moyens magnétiques tant les premiers moyens 100 que les deuxièmes moyens 110 sont formés par des aimants permanents, respectivement 102 et 112.

En variante, les moyens magnétiques et plus particulièrement les premiers moyens 100 magnétiques sont constitués par au moins un électroaimant.

Avantageusement, l'utilisation d'au moins un électroaimant formant les premiers moyens 100 magnétiques portés par le support 56 permet de commander sélectivement la présence ou l'absence du champ magnétique d'actionnement des moyens 60 de préhension et cela en contrôlant l'alimentation électrique de l'électroaimant.

De plus, l'utilisation d'au moins un électroaimant permet de faire varier l'intensité du champ magnétique en faisant varier l'intensité du courant le traversant et donc de faire varier l'effort de préhension appliqué par les moyens 60 de préhension sur la paroi 24 interne du col 16 du corps creux.

Toutefois, un électroaimant est un élément magnétique actif qui consomme de l'énergie par comparaison à un aimant permanent qui, passif, n'en nécessite aucune.

C'est l'une des raisons pour lesquelles, les moyens magnétiques sont dans le mode de réalisation formés par des aimants permanents.

En variante, les moyens magnétiques pourraient également combiner l'utilisation d'éléments actif et passif, par exemple au moins un électroaimant pour les premiers moyens 100 magnétiques et des aimants permanents pour les deuxièmes moyens 110 magnétiques de manière analogue au mode de réalisation des figures 2 à 10.

Par comparaison avec un aimant permanent, la polarité d'un électroaimant peut avantageusement être modifiée en inversant le sens du courant le parcourant, notamment pour obtenir une force d'attraction et/ou une force de répulsion.

Dans le mode de réalisation, les deuxièmes moyens 110 magnétiques sont avantageusement portés par les moyens 60 de préhension en raison de leur double fonction, la première fonction de rappel magnétique des moyens 60 de préhension vers la position rétractée et la deuxième fonction d'actionnement par interaction magnétique avec les premiers moyens 100 magnétiques pour provoquer le changement de position des moyens 60 de préhension.

Toutefois, ces deux fonctions pourraient être dissociées.

En variante, la fonction de rappel des moyens 60 de préhension vers la position rétractée est par exemple réalisée, non pas magnétiquement, mais avec des moyens de rappel élastique tel qu'un ressort.

En l'absence de deuxièmes moyens 110 magnétiques, l'actionnement des moyens 60 de préhension par le champ magnétique est par exemple obtenu par l'intermédiaire de premiers moyens 100 magnétiques exerçant une force d'attraction sur des moyens 60 de préhension comportant au moins une partie réalisée dans un matériau ferromagnétique, telle que la partie 80 supérieure d'actionnement des leviers 72.

Avantageusement, les premiers moyens 100 magnétiques exercent alors sur la partie 80 des leviers 72 une force magnétique d'attraction apte à vaincre l'effort de rappel élastique et à provoquer le changement de position des moyens 60 de préhension, de la position rétractée vers la position déployée.

Par comparaison avec le mode de réalisation dans lequel les premiers moyens 100 magnétiques portés par le support 56 sont agencés radialement à l'extérieur des moyens 60 de préhension, les premiers moyens 100 magnétiques peuvent également être agencés radialement à l'intérieur des moyens 60 de préhension.

En variante, les premiers moyens 100 magnétiques ne sont pas nécessairement fixes par rapport aux moyens 60 de préhension liés en déplacement à la tige 34.

Les premiers moyens 100 magnétiques pourraient par exemple être portés par la tige 34, l'utilisation d'un électroaimant permettant par exemple de produire sélectivement un champ magnétique en vue de l'actionnement et cela indépendamment d'un déplacement relatif déterminé, comme celui de la tige entre les positions haute et basse dans le mode de réalisation.

Dans le mode de réalisation, les moyens 60 de préhension sont constitués par des leviers 72 qui sont montés mobiles en rotation autour de l'axe A défini par les moyens 74 d'articulation.

En variante, les moyens 60 de préhension sont montés mobiles en translation entre lesdites positions rétractée et déployée.

Selon cette variante, les moyens 60 de préhension sont constitués par des éléments qui coulissent radialement par rapport à la tige 34, entre lesdites positions rétractée et déployée.

Dans une telle variante, le champ magnétique sollicitant les moyens 60 de préhension agit avantageusement par attraction.

## Revendications

1. Dispositif (10) de transport d'un corps (12) creux muni d'un col (16) qui comporte une paroi (24) interne d'orientation verticale et un bord (20) supérieur délimitant circonférentiellement une ouverture (22) d'accès à l'intérieur dudit corps (12) creux, ledit dispositif (10) comportant au moins des moyens (60) de préhension du corps (12) creux par coopération avec la paroi (24) interne du col (16) qui sont montés à l'extrémité libre inférieure d'une tige (34) et liés en déplacement à la tige (34), ladite tige (34) étant montée mobile verticalement entre :
- une position haute dans laquelle les moyens (60) de préhension sont escamotés vers le haut par la tige (34) pour permettre l'introduction radiale du col (16) du corps (12) creux dans une position déterminée de référence par rapport aux moyens (60) de préhension du dispositif (10), et
- une position basse dans laquelle les moyens (60) de préhension coopèrent radialement avec la paroi (24) interne du col (16) pour assurer la préhension du corps (12) creux,
**caractérisé en ce que** les moyens (60) de préhension sont montés mobiles radialement entre :
- une position rétractée dans laquelle les moyens (60) de préhension sont introduits verticalement de haut en bas à l'intérieur du col (16), sans contact avec la paroi (24) interne, et
- une position déployée dans laquelle les moyens (60) de préhension coopèrent avec la paroi (24) interne du col (16),
et **en ce que** le changement de position des moyens (60) de préhension d'au moins l'une à l'autre desdites positions rétractée et déployée est actionné par un champ magnétique produit par des moyens magnétiques.

2. Dispositif selon la revendication 1, **caractérisé en ce que** lesdits moyens (60) de préhension sont sollicités dans ladite position déployée par l'intermédiaire dudit champ magnétique.

3. Dispositif selon la revendication 1 ou 2, **caractérisé en ce que** lesdits moyens magnétiques d'actionnement des moyens (60) de préhension comportent au moins des premiers moyens (100, 102) magnétiques qui provoquent sélectivement le changement de position desdits moyens (60) de préhension, au moins de la position rétractée vers la position déployée, par application dudit champ magnétique sur les moyens (60) de préhension.

4. Dispositif selon la revendication 3, **caractérisé en ce que** lesdits premiers moyens (100, 102) magnétiques sont montés sur un support (56) du dispositif (10) par rapport auquel la tige (34) est montée mobile verticalement de manière que lesdits premiers moyens (100, 102) magnétiques provoquent le changement de position desdits moyens (60) de préhension depuis la position rétractée vers la position déployée lorsque la tige (34), déplacée verticalement vers le bas depuis sa position haute, atteint sa position basse.

5. Dispositif selon la revendication 4, **caractérisé en ce que** lesdits premiers moyens (100, 102) magnétiques sont agencés sur le support (56) du dispositif pour produire un champ magnétique circonférentiellement continu.

6. Dispositif selon l'une quelconque des revendications 3 à 5, **caractérisé en ce que** les premiers moyens (100) magnétiques sont constitués par des aimants (102) permanents.

7. Dispositif selon l'une quelconque des revendications 1 à 6, **caractérisé en ce que** les moyens (60) de préhension sont rappelés automatiquement vers la position rétractée par des moyens (112) de rappel.

8. Dispositif selon l'une quelconque des revendications 1 à 7, **caractérisé en ce que** les moyens magnétiques d'actionnement des moyens (60) de préhension comportent des deuxièmes moyens (110, 112) magnétiques qui sont portés par lesdits moyens (60) de préhension.

9. Dispositif selon l'une quelconque des revendications 3 à 7 et la revendication 8, **caractérisé en ce que** les deuxièmes moyens (110, 112) magnétiques sont agencés relativement aux premiers moyens (100, 102) magnétiques pour présenter une polarité identique à celle desdits premiers moyens (100, 102) magnétiques de manière à exercer réciproquement les uns sur les autres une force magnétique de répulsion.

10. Dispositif selon les revendications 7 et 8, **caractérisé en ce que** les moyens de rappel des moyens (60) de préhension vers la position rétractée sont constitués par lesdits deuxièmes moyens (110, 112) magnétiques.

11. Dispositif selon l'une des revendications 9 ou 10, **caractérisé en ce que** les deuxièmes moyens (110) magnétiques sont constitués par des aimants (112) permanents.

12. Dispositif selon la revendication 11, **caractérisé en ce que**, en position déployée, lesdits deuxièmes moyens (110, 112) magnétiques portés par les moyens (60) de préhension sont décalés, verticalement vers le bas, par rapport auxdits premiers moyens (100, 102) magnétiques portés par le support (56).

13. Dispositif selon l'une quelconque des revendications précédentes, **caractérisé en ce que** les moyens (60) de préhension sont montés mobiles en rotation entre lesdites positions rétractée et déployée autour d'un axe (A).

14. Dispositif selon la revendication 13, **caractérisé en ce que** les moyens (60) de préhension sont constitués par des leviers (72), chaque levier (72) comportant verticalement de part et d'autre dudit axe (A) de rotation une partie (80) supérieure d'actionnement et une partie (82) inférieure de préhension qui sont reliées par une partie (84) intermédiaire de liaison comportant ledit axe (A).

15. Dispositif selon l'une quelconque des revendications 1 à 14, **caractérisé en ce que** le dispositif (10) comporte des moyens (88) de butée qui déterminent la position rétractée des moyens (60) de préhension.

## Patentansprüche

1. Vorrichtung (10) zum Transport eines Hohlkörpers (12), der mit einem Hals (16) versehen ist, welcher eine Innenwand (24) mit vertikaler Ausrichtung und einen oberen Rand (20), der eine Zugangsöffnung (22) zum Inneren des Hohlkörpers (12) in Umfangsrichtung begrenzt, aufweist, wobei die Vorrichtung (10) wenigstens Mittel (60) zum Greifen des Hohlkörper (12) durch Zusammenwirken mit der Innenwand (24) des Halses (16) aufweist, die am unteren freien Ende einer Stange (34) angebracht sind und mit der Stange (34) bewegungsverbunden sind, wobei die Stange (34) vertikal beweglich angebracht ist zwischen:
- einer oberen Position, in welcher die Greifmittel (60) von der Stange (34) nach oben eingezogen sind, um die radiale Einführung des Halses (16) des Hohlkörpers (12) in eine bestimmte Bezugsposition bezüglich der Greifmittel (60) der Vorrichtung (10) zu ermöglichen, und
- einer unteren Position, in welcher die Greifmittel (60) radial mit der Innenwand (24) des Halses (16) zusammenwirken, um das Greifen des Hohlkörpers (12) sicherzustellen,
**dadurch gekennzeichnet, dass** die Greifmittel (60) radial beweglich angebracht sind zwischen:
- einer zurückgezogenen Position, in welcher die Greifmittel (60) vertikal von oben nach unten ins Innere des Halses (16) eingeführt werden, ohne Kontakt mit der Innenwand (24), und
- einer gespreizten Position, in welcher die Greifmittel (60) mit der Innenwand (24) des Halses (16) zusammenwirken,
und dadurch, dass die Änderung der Position der Greifmittel (60) wenigstens aus einer dieser Positionen, der zurückgezogenen oder der gespreizten, in die andere durch ein Magnetfeld bewirkt wird, das von magnetischen Mitteln erzeugt wird.

2. Vorrichtung nach Anspruch 1, **dadurch gekennzeichnet, dass** die Greifmittel (60) durch das Magnetfeld in die gespreizte Position vorgespannt werden.

3. Vorrichtung nach Anspruch 1 oder 2, **dadurch gekennzeichnet, dass** die magnetischen Mittel zur Betätigung der Greifmittel (60) wenigstens erste magnetische Mittel (100, 102) umfassen, welche selektiv die Positionsänderung der Greifmittel (60) wenigstens aus der zurückgezogenen Position in die gespreizte Position durch Anlegen des Magnetfeldes an die Greifmittel (60) hervorrufen.

4. Vorrichtung nach Anspruch 3, **dadurch gekennzeichnet, dass** die ersten magnetischen Mittel (100, 102) auf einem Halter (56) der Vorrichtung (10) angebracht sind, in Bezug auf den die Stange (34) vertikal beweglich angebracht ist, derart, dass die ersten magnetischen Mittel (100, 102) die Positionsänderung der Greifmittel (60) aus der zurückgezogenen Position in die gespreizte Position hervorrufen, wenn die Stange (34), die aus ihrer oberen Position vertikal nach unten bewegt wird, ihre untere Position erreicht.

5. Vorrichtung nach Anspruch 4, **dadurch gekennzeichnet, dass** die ersten magnetischen Mittel (100, 102) auf dem Halter (56) der Vorrichtung so angebracht sind, dass sie ein in Umfangsrichtung kontinuierliches Magnetfeld erzeugen.

6. Vorrichtung nach einem der Ansprüche 3 bis 5, **dadurch gekennzeichnet, dass** die ersten magnetischen Mittel (100) aus Permanentmagneten (102) bestehen.

7. Vorrichtung nach einem der Ansprüche 1 bis 6, **dadurch gekennzeichnet, dass** die Greifmittel (60) von Rückholmitteln (112) automatisch in die zurückgezogene Position zurückgeholt werden.

8. Vorrichtung nach einem der Ansprüche 1 bis 7, **dadurch gekennzeichnet, dass** die magnetischen Mittel zur Betätigung der Greifmittel (60) zweite magnetische Mittel (110, 112) umfassen, welche von den Greifmitteln (60) getragen werden.

9. Vorrichtung nach einem der Ansprüche 3 bis 7 und Anspruch 8, **dadurch gekennzeichnet, dass** die zweiten magnetischen Mittel (110, 112) relativ zu den ersten magnetischen Mitteln (100, 102) so angeordnet sind, dass sie eine Polarität aufweisen, die mit derjenigen der ersten magnetischen Mittel (100, 102) identisch ist, so dass sie wechselseitig eine abstoßende Magnetkraft aufeinander ausüben.

10. Vorrichtung nach den Ansprüchen 7 und 8, **dadurch gekennzeichnet, dass** die Mittel zur Rückholung der Greifmittel (60) in die zurückgezogene Position aus den zweiten magnetischen Mitteln (110, 112) bestehen.

11. Vorrichtung nach einem der Ansprüche 9 oder 10, **dadurch gekennzeichnet, dass** die zweiten magnetischen Mittel (110) aus Permanentmagneten (112) bestehen.

12. Vorrichtung nach Anspruch 11, **dadurch gekennzeichnet, dass** in der gespreizten Position die zweiten magnetischen Mittel (110, 112), die von den Greifmitteln (60) getragen werden, bezüglich der ersten magnetischen Mittel (100, 102), die von dem Halter (56) getragen werden, vertikal nach unten versetzt sind.

13. Vorrichtung nach einem der vorhergehenden Ansprüche, **dadurch gekennzeichnet, dass** die Greifmittel (60) drehbeweglich um eine Achse (A) zwischen der zurückgezogenen Position und der gespreizten Position gelagert sind.

14. Vorrichtung nach Anspruch 13, **dadurch gekennzeichnet, dass** die Greifmittel (60) aus Hebeln (72) bestehen, wobei jeder Hebel (72) vertikal beiderseits der Drehachse (A) einen oberen Betätigungsteil (80) und einen unteren Greifteil (82) aufweist, welche durch einen dazwischenliegenden Verbindungsteil (84) verbunden sind, der die Achse (A) umfasst.

15. Vorrichtung nach einem der Ansprüche 1 bis 14, **dadurch gekennzeichnet, dass** die Vorrichtung (10) Anschlagmittel (88) aufweist, welche die zurückgezogene Position der Greifmittel (60) bestimmen.

## Claims

1. Device (10) for transporting a hollow body (12) provided with a neck (16) which comprises an internal wall (24) of vertical orientation and a top edge (20) circumferentially delimiting an opening (22) for access to the interior of said hollow body (12), said device (10) comprising at least means (60) for gripping the hollow body (12) by cooperating with the internal wall (24) of the neck (16) which are mounted at the bottom free end of a rod (34) and linked in movement to the rod (34), said rod (34) being mounted to move vertically between:
- a high position in which the gripping means (60) are retracted upwards by the rod (34) to allow the radial introduction of the neck (16) of the hollow body (12) into a determined reference position in relation to the gripping means (60) of the device (10), and
- a low position in which the gripping means (60) cooperate radially with the internal wall (24) of the neck (16) to ensure the gripping of the hollow body (12),
**characterized in that** the gripping means (60) are mounted to move radially between:
- a retracted position in which the gripping means (60) are introduced vertically downwards into the neck (16), without contact with the internal wall (24), and
- a deployed position in which the gripping means (60) cooperate with the internal wall (24) of the neck (16),
and **in that** the change of position of the gripping means (60) from at least one to the other of said retracted and deployed positions is actuated by a magnetic field produced by magnetic means.

2. Device according to Claim 1, **characterized in that** said gripping means (60) are stressed into said deployed position via said magnetic field.

3. Device according to Claim 1 or 2, **characterized in that** said magnetic means for actuating the gripping means (60) comprise at least first magnetic means (100, 102) which selectively provoke the change of position of said gripping means (60), at least from the retracted position to the deployed position, by application of said magnetic field to the gripping means (60).

4. Device according to Claim 3, **characterized in that** said first magnetic means (100, 102) are mounted on a support (56) of the device (10) in relation to which the rod (34) is mounted to move vertically in such a way that said first magnetic means (100, 102) provoke the change of position of said gripping means (60) from the retracted position to the deployed position when the rod (34), moved vertically downwards from its high position, reaches its low position.

5. Device according to Claim 4, **characterized in that** said first magnetic means (100, 102) are arranged on the support (56) of the device to produce a circumferentially continuous magnetic field.

6. Device according to any one of Claims 3 to 5, **characterized in that** the first magnetic means (100) consist of permanent magnets (102).

7. Device according to any one of Claims 1 to 6, **characterized in that** the gripping means (60) are returned automatically to the retracted position by return means (112).

8. Device according to any one of Claims 1 to 7, **characterized in that** the magnetic means for actuating the gripping means (60) comprise second magnetic means (110, 112) which are borne by said gripping means (60).

9. Device according to any one of Claims 3 to 7 and Claim 8, **characterized in that** the second magnetic means (110, 112) are arranged relative to the first magnetic means (100, 102) to exhibit a polarity identical to that of said first magnetic means (100, 102) so as to reciprocally exert a repulsion magnetic force on one another.

10. Device according to Claims 7 and 8 **characterized in that** the means for returning the gripping means (60) to the retracted position consist of said second magnetic means (110, 112).

11. Device according to any one of Claims 9 or 10, **characterized in that** the second magnetic means (110) consist of permanent magnets (112).

12. Device according to Claim 11, **characterized in that**, in deployed position, said second magnetic means (110, 112) borne by the gripping means (60) are offset, vertically downwards, in relation to said first magnetic means (100, 102) borne by the support (56).

13. Device according to any one of the preceding claims, **characterized in that** the gripping means (60) are mounted to move in rotation between said retracted and deployed positions about an axis (A).

14. Device according to Claim 13, **characterized in that** the gripping means (60) consist of levers (72), each lever (72) comprising, vertically on either side of said rotation axis (A), a top actuation part (80) and a bottom gripping part (82) which are linked by an intermediate linking part (84) comprising said axis (A).

15. Device according to any one of Claims 1 to 14, **characterized in that** the device (10) comprises abutment means (88) which determine the retracted position of the gripping means (60).
